# EUROPEAN PATENT APPLICATION

(11) **EP 3 517 508 A1**
(43) Date of publication of application: **31.07.2019**
(21) Application number: 18195919.8
(22) Date of filing: 21.09.2018
(51) Int. Cl.: C02F 9/00, C02F 1/04, C02F 1/10, C02F 1/44, C02F 103/10, C02F 103/16

(54) **ZERO LIQUID DISCHARGE TREATMENT PROCESS FOR RECOVERING WATER FROM A CONTAMINATED LIQUID EFFLUENT FOR ITS SUBSEQUENT REUSE**

(71) Applicant: SUEZ Groupe, 92040 Paris La Défense (FR)
(72) Inventor: MARTIN GARCIA, Ignacio, 46110 GODELLA (ES); CAMPROVIN PORTILLO, Pere, BARCELONA 08014 (ES); LEFÈVRE, Benoît, 13200 ARLES (FR); GOMEZ PORTUGAL, Belinda, 08402 GRANOLLERS (ES)
(74) Representative: Sugrañes Patentes y Marcas

(57) **Abstract**

The invention relates to a ZL treatment process for the treatment of wastewater to be treated coming from the industry which includes at least the following steps:
a) a first step of desalination avoiding precipitation of salts by means of a treatment by advanced reverse osmosis of high degree of recovery, in which several periodic cleanings are carried out by contacting the surface of some membranes with water with lower content in dissolved salts than the wastewater to be treated;
b) a second step of concentration, in which the rejection of the first stage produced in reverse osmosis is concentrated by applying one of the technologies of the group formed by vibratory osmosis, forward osmosis and humidification-dehumidification;
c) a zero liquid discharge stage acting as a crystallizer or an evapo-crystallizer, wherein the liquid effluent that has been concentrated to the maximum in the previous steps is around the point of saturation in which the precipitation of the salts which are present mostly in the liquid effluent begins to occur, the zero liquid discharge step acting as a crystallizer, wherein the reject water from the concentration step is recovered by evaporation and a stream of solids is produced.

## Description

### Technological field

The present application is directed to a zero liquid discharge in which it is possible to recover almost all of the water from a contaminated liquid effluent for reuse, avoiding the complete or partial discharge. The process progressively reduces the volume of the liquid effluent and concentrates pollutants up to the last treatment step. A stream of decontaminated water and a solid residue wherein all contaminants are concentrated are obtained.

### Background art

Freshwater scarcity, one of the most critical global challenges of our time, poses a major threat to economic growth, water security, and ecosystem health. The challenge of providing adequate and safe drinking water is further complicated by climate change and the pressures of economic development and industrialization. The public and industrial sectors consume substantial amounts of freshwater while producing vast quantities of wastewater. If inadequately treated, wastewater discharge into the aquatic environment causes severe pollution that adversely impacts aquatic ecosystems and public health.

Recovery and recycling of wastewater has become a growing trend in the past decade due to rising water demand. Wastewater reuse not only minimizes the volume and environmental risk of discharged wastewater, but also alleviates the pressure on ecosystems resulting from freshwater withdrawal. Through reuse, wastewater is no longer considered a "pure waste" that potentially harms the environment, but rather an additional resource that can be harnessed to achieve water sustainability. Zero liquid discharge (ZLD) is an ambitious wastewater management strategy that eliminates any liquid waste leaving the plant or facility boundary, with the majority of water being recovered for reuse. ZLD obviates the risk of pollution associated with wastewater discharge and maximizes water usage efficiency, thereby striking a balance between exploitation of freshwater resources and preservation of aquatic environments.

An installation with zero liquid discharge (ZLD) can be defined as an installation in which there is no discharge of effluents to the environment or they are not eliminated by conventional means, such as unloading them in the sewerage system. Zero liquid discharge plants use effluent treatment technologies that condition all effluents for reuse, either for landscape irrigation or to replace conventional water supplies in an industrial process. The reuse of effluents reduces, as previously mentioned, the demand for fresh water.

The technologies present in the ZLD type facilities include sedimentation, dissolved air flotation, media filtration, activated carbon filtration, ultrafiltration, and reverse osmosis. The technologies to be used vary widely depending on the case. For example, in the electricity generation industry, effluents with large amounts of salts usually require an evaporation step, which separates the solid waste to be deposited in filling areas. Evaporation produces clean water for reuse in cooling or other processes.

Mining is another industry that can benefit from ZLD facilities for the treatment of its effluents, since the raw effluents from mining are acidic and extremely saline, and often contain a large amount of sediment. An example of a treatment plant in the mining industry that has been disclosed is the one that was put into practice at the Collahuasi copper mine, whose effluent treatment plant was sized to treat a flow of 216 m³/h, approximately 5 million liters per day.

The facility uses a series of treatments, including sedimentation, dissolved air flotation, media filtration, activated carbon filtration, ultrafiltration, and reverse osmosis. The removal of as much sediment as possible from the water is particularly important. In this way, the company's investment in infrastructure is protected through the prevention of fouling (the term fouling refers to all phenomena related to the fouling of the membranes) or other damage to the membranes and other equipment. In the sedimentation process, the suspended solids are deposited by means of the force of gravity. Then, the flotation by dissolved air allows the elimination of various colloidal materials and dispersed particles. In this stage, the water is filtered to remove the solids that still remain in it after the flotation stage. The removal of dissolved organic material is completed by filtration with activated carbon, followed by ultrafiltration. This last step ensures the elimination of residual suspended solids, colloids, and organic matter-including bacteria and viruses - before the water is treated by reverse osmosis. The final polishing step in the water treatment process, is the reverse osmosis desalination, by which it is ensured that the dissolved salts and heavy metals are removed from the water before reuse.

Other industries that pose a real challenge are those in which instant copper smelting is carried out, wherein the dust produced during copper flash smelting needs to be treated. The dust is currently recirculated to the flash furnace, resulting in an accumulation of impurities in the circuit that reaches the limit for the amount of impurities in the feed concentrate to guarantee the quality of the final product (for instance, cathodes). By treating the dust, the main impurities will be bled from the circuit, resulting in the processing of concentrates with many more impurities (complex concentrates). But the effluents produced in the processing of these "complex" concentrates will contain many more impurities than are found in the current concentrates.

The industries in which instant copper smelting is carried out usually have a weak acid treatment plant and a wastewater treatment plant but are currently unable to halt or reduce this impurity increase. Therefore, in order to treat concentrates with more impurities, the wastewater treatment system of the factory must be upgraded.

In relation to this, in May 2015 the environmental authorities of the regional government of Andalucia published new effluents limits for discharges, with tighter regulations for selenium (less than 0.1 mg/l for all discharges to the environment) and for the cadmium (less than 0.012) mg/L). Meanwhile, the Water Framework Directive 2000/60/EC, which is a European directive which commits European Union member states to achieve good qualitative and quantitative status of all water bodies, published a list of priority substances identified as dangerous that must be disposed from the discharges by 2020. Mercury, cadmium, lead and its compounds are included is said list. All this will be discussed with the government for the new Integrated Environmental Authorization (IEA).

To comply with these regulations and control future increases in impurities, and to be prepared for potentially more restrictive discharge limits, not to mention the reduction of discharges to the river by recycling most of this current, the need to incorporate as part of the wastewater treatment a new stage designed especially for the elimination of selenium is inevitable.

### Explanation of the invention

The conventional physicochemical process does not eliminate the selenium species, so it requires a second stage for an alternative treatment method such as iron coprecipitation, biological reduction or zero liquid discharge (ZLD) processes to achieve the elimination objectives. Of these alternatives, the ZLD processes are considered ideal because they reduce the liquid discharged to the environment and allow a maximum of water recovery.

Early ZLD systems were based on stand-alone thermal processes, where the wastewater was typically evaporated in a brine concentrator followed by a brine crystallizer or an evaporation pond. The condensed distillate water in ZLD systems is collected for reuse, while the produced solids are either sent to a landfill or recovered as valuable salt by-products.

However, it should be mentioned that a ZLD process is generally characterized by the intensive use of energy and its high cost. Conventional ZLD systems, which have had a successful operation for 40 years and are still being built, require a considerable amount of energy and capital. As a result, ZLD has long been considered non-viable and has been applied only in limited cases.

Therefore, the present invention aims to provide a ZLD process to solve the problems related to the species to be eliminated, and further, that can be versatile to be applicable to other industries and environments.

Reverse osmosis (RO), a membrane-based technology widely used in desalination, was considered to be incorporated into ZLD systems to improve energy and economic efficiency. However, reverse osmosis, although it is much more energy efficient than thermal evaporation, can only be applied to feed waters with a limited range of salinity.

A pilot test on conventional ZLD alternatives for treating both the final effluents of a wastewater treatment plant and a weak acid plant together were carried out by the inventors, resulting in a process that was expensive and inefficient due to the heterogeneity of both streams.

On the contrary, some non-thermal processes showed promising results, which underscores the need to demonstrate recovery improvement technologies for the copper industrial process, that is, in this operating environment, and provide an economically viable solution.

Thus, the zero liquid discharge according to the invention include other technologies such as advanced RO, forward osmosis (FO), membrane distillation, humidification-dehumidification and alternative evaporators.

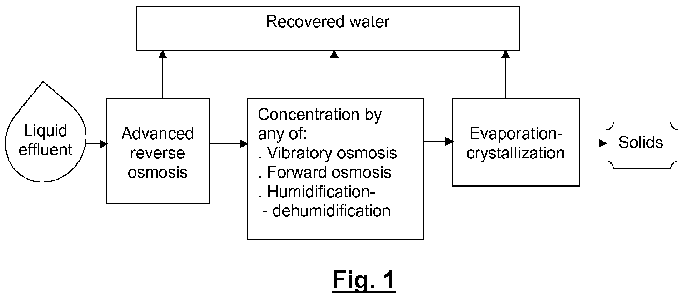

The zero liquid discharge treatment process object of the present invention, which has been depicted in Fig. 1 comprises the following steps:
- a first step of desalination by advanced reverse osmosis (high degree of recovery): a reverse osmosis treatment in which the precipitation of salts that limits the degree of recovery is avoided, applying periodic cleanings in which the surface of the membranes is brought into contact with more diluted water in dissolved salts;
- a second step of concentration: the rejection of reverse osmosis is concentrated between applying, as the case may be, one of the following technologies: vibratory osmosis, forward osmosis, or humidification - dehumidification; and
- a third step of zero liquid discharge acting as a crystallizer: in the previous stages two of the process, the liquid effluent has been concentrated to the maximum, being found around the point of saturation in which the precipitation of the salts which are present mostly in the liquid effluent begins to occur. The zero liquid discharge stage acts as a crystallizer, recovering the reject water from the concentration stage by evaporation and producing a stream of solids.

Thus, the ZLD treatment process according to the invention comprises the abovementioned three stages associated, respectively, to desalination, concentration and evaporation-crystallization, placed in series and where the concentrate of each stage is introduced in the following stage.

Most of the ZLD processes on the market consist of an evaporator followed by a crystallizer. In the evaporators the volume of the liquid effluent is reduced by evaporation, obtaining a condensate of water. In the crystallizers, the contaminants present in the liquid effluent precipitate with the solids. However, the ZLD processes with a single stage of Evapo-crystallization are characterized by high investment and operation costs.

The ZLD treatment process according to the invention has greater economic viability than those zero discharge processes because of including an intermediate concentration stage (second stage) to further reduce the volume of the desalination stage (the first stage of advanced reverse osmosis) prior to the evaporation and crystallization stage (third stage).

Although ZLD holds great promise to reduce water pollution and augment water supply, its viability is determined by a balance among the benefits associated with ZLD, energy consumption, and capital/operation costs. Incorporating these technologies in the first and second stages of the ZLD treatment process of the invention results in the reduction of the associated energy consumption and costs and in expanding the applicability of ZLD. The application of the treatment process of the invention has achieved the following advantages:
- Reductions by minimum 50% of all costs
- Facilitate the processing of complex concentrates: treating complex concentrates will not be possible without a secondary treatment of the wastewater treatment plant overflow, due to the rise in impurities in the water effluent produced by the impurities of the complex concentrates.

- Reduction of the discharge by 99%, and the reduction of the fresh water needed for the process by 39%. Currently the process requires 7m3 of fresh water per ton of copper metal produced of which 2.6m3 (90m3/h) is discharged into a local river.
- Comply with the water discharge requirements of the administration regarding with the effluent composition (for selenium less than 0.1 mg/l and for cadmium less than 0.012 mg/l).

Two advanced osmosis systems are considered for the first stage of desalination in the present invention:
- a closed circuit desalination: a single-stage osmosis system that operates in production and purge cycles. In the production cycles the liquid effluent is concentrated over time while water is produced. Once the concentrated liquid effluent has reached a preset salinity, it is purged and cleaned with the same liquid effluent with lower concentration of salts. With this system of periodic cleaning, the salts are not given time to precipitate.
- a flow reversal: a two or three stage osmosis system with continuous operation, but alternating the different stages periodically with each other: from time to time the last stage in which the concentration of salts and therefore the precipitation potential are greater, are gone interchanging with the first stage by means of a system of valves that treat the liquid effluent of lower concentration. In this way it is also avoided that it gives time to the formation of precipitates and the degree of recovery is increased.

With regard to the technologies which may be selected for carrying out the second step of concentration according to the process of the invention, the following applies:
- Vibratory osmosis: stage of osmosis that incorporates vibratory membranes that achieve recovering water and concentrating the rejection of the previous stage with high content in solids and high potential of formation of precipitates.
- Forward osmosis: stage that uses forward osmosis membranes to concentrate the rejection with a solids content and moderate precipitate formation potential. In forward osmosis, the water passes from the rejection of the previous stage to a solution of higher salinity due to the difference in osmotic pressure.
- Humidification - dehumidification: stage in which hot air comes into contact with the rejection of the previous stage. During this contact, the rejection is concentrated when water passes from it to the hot air. In the stage of dehumidification the hot air is cooled condensing the decontaminated water. Concentration through humidification-dehumidification is a variant to be used in cases where there is the possibility of using sources of residual heat from another process or heat from renewable energies.

### Brief description of the drawings

In order to better understand the subject matter that is disclosed herein and to exemplify how it may be carried out in practice, an embodiment will now be described by way of non-limiting examples only, with reference to the accompanying drawings, in which:
Fig. 1 is a scheme of the ZLD treatment process of the present invention; and
Fig. 2 is a schematic view of a system to perform the ZLD treatment process according to the present invention.

### Detailed description of the invention and drawings

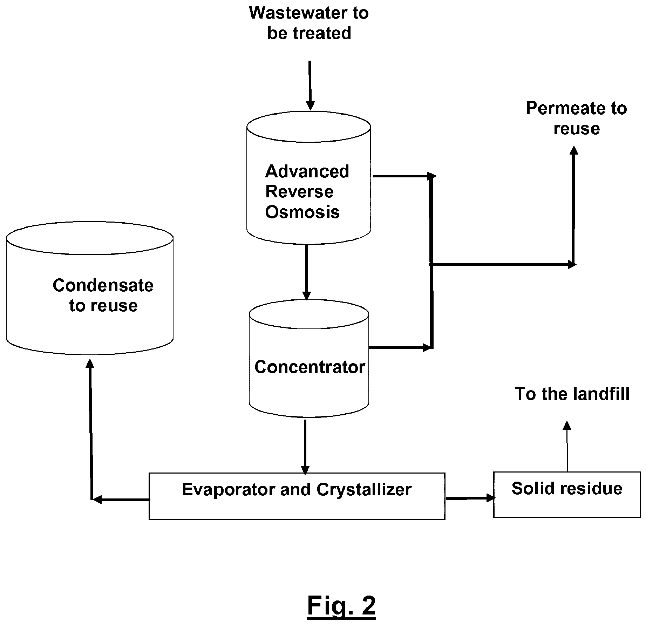

The zero liquid discharge treatment process object of the present invention, which has been schematically depicted in Fig. 1 comprises mainly three steps: 1) a first step of desalination by advanced reverse osmosis; 2) a second step of concentration by applying one of the technologies of the group formed by vibratory osmosis, forward osmosis and humidification-dehumidification; and 3) a third step of evaporation-crystallization. See in Fig. 2 a general scheme of a system to perform the zero liquid discharge treatment process of the invention.

### 1) First step of desalination by advanced reverse osmosis (high degree of recovery).

It consists in a reverse osmosis treatment in which the precipitation of salts that limits the degree of recovery is avoided, applying periodic cleanings in which the surface of the membranes is brought into contact with more diluted water in dissolved salts. Two advanced osmosis systems are considered: a) Closed circuit desalination, and b) Flow reversal.

### 1a) Closed circuit desalination:

It consists in a single-stage osmosis system that operates in production and purge cycles. In the production cycles the liquid effluent is concentrated over time while water is produced. Once the concentrated liquid effluent has reached a preset salinity, it is purged and cleaned with the same liquid effluent with lower concentration of salts. With this system of periodic cleaning, the salts are not given time to precipitate.

It can be carried out by a Closed-Circuit Desalination Reverse-Osmosis technology (CCD-RO) that targets high permeate recovery with low energy consumption, which is achieved by using a reverse osmosis that works by recirculating pressurized feed water back into the membrane system while producing low salinity effluent. The concentrate stream can be recirculated until a certain recovery rate is reached (up to 98%), then the brine inside the recirculation loop is wasted and substituted by feed water.

It has been found that one of the optimum ways to carry out the closed-circuit desalination is the ReFlex RO systems by the company Desalitech, Inc. Desalitech's ReFlex RO systems featuring Closed Circuit Desalination (CCD™) technology reduce brine waste by up to 75% and energy consumption by up to 35% compared to traditional RO designs. A ReFlex RO system is a reverse osmosis system comprised of off-the-shelf equipment including membranes which features Desalitech's advanced and proprietary process design and engineering.

Desalitech's ReFlex products work by recirculating pressurized feedwater until a desired recovery level is reached. Brine is replaced with fresh feed without stopping the flow of pressurized feed or permeate. The low initial pressure of each CCD™ sequence means a lower average operating pressure and less pump energy than required in traditional RO systems. ReFlex RO systems achieve recovery by recirculation, not with multiple membrane elements and stages in series, and can therefore reach any desired recovery percentage in a single stage. Over 97% has been demonstrated, limited only by the scaling characteristics of the pretreated feed water. Recovery is adjustable at the system control panel, providing unmatched flexibility. Cross flow supplied by a circulation pump washes the membrane and salinity cycling disrupts and greatly reduces scaling and fouling. Cycle times are shorter than the induction time for scale deposition and frequent and complete brine rejection can stop and even reverse precipitation, making very high recovery rates possible even from difficult source waters. Short membrane arrays and high cross flow also allow ReFlex systems to operate at higher average flux rates without exceeding membrane manufacturer's flow or recovery specifications. Over five years of continuous operation in commercial installations has proven that ReFlex products are reliable.

This way of operating cross-flow reverse osmosis membranes is highly efficient and flexible as a simple filtration device. Like any simple filtration device, these CCD-RO systems feature equal feed and permeate flow rates during normal operation mode. At a software-based set point, the system automatically flushes out all the concentrate, and then returns to its normal operation mode. The flush is triggered by the CCD-RO operating software, based on any combination of flow, concentration, pressure and additional set points. During the concentrate flush step, the system continues to be fed and to generate permeate, while concentrate is pushed out of the system in one sweep.

The CCD-RO system presents the following advantages:
. The resulting average membrane feed pressure is claimed to lower than the operation pressure of conventional RO systems. As a result, the energy consumption is reduced by up to 35% and the brine flow is reduced by 50-75% versus a conventional RO system.
. Due to the relatively high cross flow velocity and short vessel length a more uniform RO element flux is achieved, which lowers fouling in the front of the system. The periodic concentrate dump reduces scaling tendencies inside the RO elements in the tail of the system, which allows operation at higher system recovery.

### 1b) Flow reversal:

Among the available flow reversal techniques, the one developed by the company Rotec Ltd. It consists in a Reverse Osmosis (RO) desalination system which prevents scaling mineral scaling on the surface of membranes and pipes in the water treatment system by applying Flow Reversal (FR) technology, wherein the direction of the feed flow is reversed periodically to mitigate scaling because scale does not have time to form on membranes surfaces before being swept away by under-saturated feed solution conditions. This, it is a two or three stage osmosis system with continuous operation but alternating the different stages periodically with each other: from time to time the last stage in which the concentration of salts and therefore the precipitation potential are greater, are gone interchanging with the first stage by means of a system of valves that treat the liquid effluent of lower concentration. In this way it is also avoided giving time to the formation of precipitates and the degree of recovery is increased.

This process for scale prevention on membranes surfaces works by periodically switching the flow direction in RO pressure vessel arrays. The frequency of switching is dictated by the time it takes for a supersaturated solution in the concentrate to grow a population of scale particles that can allow continued scale growth (denoted the "Induction Time"). By using the effectively under- saturated feed to sweep away the beginning scale particles in the concentrate before they exceed a critical size, extensive precipitation is prevented. As a consequence, the system can reach higher recoveries. The flow reversal principle is based on the fact that during filtration, the feed flow and the brine flow are switched before supersaturated solutions can precipitate from the concentrate onto the membrane.

### 2) Concentration stage:

The rejection of reverse osmosis is concentrated between applying, as the case may be, one of the following technologies: Vibratory Osmosis, Forward osmosis, and Humidification - dehumidification

**2a) Vibratory Osmosis:** stage of osmosis that incorporates vibratory membranes that achieve recovering water and concentrating the rejection of the previous stage with high content in solids and high potential of formation of precipitates.

Among all the available possibilities, an optimal way to implement vibratory osmosis according to this stage is by using membranes according to the Vibratory Shear Enhanced Processing (VSEP) technology developed by the company New Logic Research, Inc., which are made of various polymers such as polyethersulfone, polyamides, and other thin film composites. Over 200 different membranes types are routinely employed in VSEP systems. Vibration is applied to the membranes to avoid precipitation of scaling agents. By doing so, it is possible to increase the recovery efficiency. VSEP uses the same thin film polymeric membranes found in spiral-would RO membrane systems, but they are developed in a different way. The membranes are attached to evenly spaced discs than tightly wound around a spacer. By performing a shift approximately 54 times per second, VSEP can achieve up to 90% recovery in a single pass. By arranging VSEP systems in series, recoveries greater than 99% are attainable. VSEP helps meet discharge guidelines, recycles water and improves mine economics.

There are major features and benefits built right into VSEP. Its vibratory shearing action produces high filtration rates in separations ranging from low molecular weights through 30 microns. The feed slurry in a VSEP system can be extremely viscous (up to 70% solids) and still be successfully processed. The way it works is simple. As the membrane leaf elements vibrate vigorously, the shear waves produced cause solids and foulants to be repelled and liquid to flow through the membrane pores unhindered. The shear rate at the membrane surface is approximately 150,000 inverse seconds, literally ten times greater than the rates obtainable in cross-flow filtration systems. The system achieves high energy efficiency by applying shear into a thin zone near the filter's surface. Also, a VSEP system occupying only 20 square feet of floor space can support up to 1500 square feet of membrane area and do the work of a system 10 to 100 times larger. The system is also modular for easy expansion and its installation is no more complicated than the installation of a pump.

**2b) Forward osmosis:** stage that uses forward osmosis (FO) membranes to concentrate the rejection with a solids content and moderate precipitate formation potential. In forward osmosis, the water passes from the rejection of the previous stage to a solution of higher salinity due to the difference in osmotic pressure.

For the implementation of forward osmosis of the second stages it has been considered the forward osmosis desalination technology developed by the company Porifera, Inc. (called PFO from now on), that utilizes a carbon nanotube membrane. The high flow rates at which water and gases flow through carbon nanotubes facilitate desalination at high flux rates. This allows water treatment systems that are low-fouling and energy efficient.

This technology by Porifera Inc, based on incorporating membranes made out of carbon nanotubes brings forward the possibility to desalinate water at high fluxes by using a FO system (three times higher). In this line, it proposes a combined system composed by a FO to purify water and a RO to recover the Draw solution and the water for reuse. Also, there is a plate and frame (PF) format that has the advantage of a short path on the permeate/draw solution side of the membrane, which improves hydrodynamic efficiency and has the potential to reduce concentration polarization. When applied to FO systems, a narrower feed channel is used, and this gives a good packing density. However, the channel width has to be carefully selected to ensure that there is not an excessive pressure drop at the cross-flow velocity employed for the channel length required.

The PFO Recycler is a combined FO and RO process using off-the shelf RO products configured in an easy to operate design specifically designed to maximize efficiency of Porifera's patented FO elements and systems. The PFO Concentrator is a modified FO and RO process that utilizes certain aspects of combining FO and multiple RO steps to achieve higher salinity concentrations using less energy than thermal processes. Membrane and elements by Porifera Inc. provide optimal flux and rejection in the market. The combination of best membrane and best element provides the smallest footprint, lowest CAPEX, and lowest OPEX FO based system.

The plate and frame (PF) format has the advantage of a short path on the permeate/draw solution side of the membrane, which improves hydrodynamic efficiency and has the potential to reduce concentration polarization. When used in membranes the plate separation is quite wide to ensure that the feed channels do not become clogged. In FO, a narrower feed channel is used, and this gives a good packing density. However, the channel width has to be carefully selected to ensure that there is not an excessive pressure drop at the cross-flow velocity employed for the channel length required.

Porifera Inc. uses a building block system made up by several PFO modules and the PFO modules are made by several PFO elements piled up. The element sizes used are relatively small with a typical commercial product having a 7 m² membrane area. Different spacer options are used depending on application. The products are claimed to be able to operate in the key competitive flux range of around 30 Imh or more at a low-pressure loss across the module. The PFO module has an important flexibility and versatility of the feed and draw flow arrangement, with the possibility of configuring the elements in the stack for series, parallel, and tapered flow schemes. In series, cross-flow velocity can be increased whereas if there is a significant concentration change in a single pass, the flow can be configured in parallel. Depending on the different requirements of the feed and draw, the series and parallel choices can be adjusted to suit. Due to the short path length and relatively high cross-flow of the PFO elements, concurrent layouts are used in the simplest systems, though a more efficient counter-current flow might be used for the larger systems. Finally, a tapered option is available if a high degree of conversion is required in a single pass.

A FO based process provides many benefits when treating challenging waste streams. These benefits include high fouling resistance to most particulates, organics, and other constituents that often lead to rapid fouling and downtime for other membrane technologies (e.g., MF, UF, NF, and RO) and thermal technologies.

On the other hand, other technology is also considered for the forward osmosis of the second stage, namely a technology developed by Oasys Water, Inc., an American based water technology firm.

Oasys Water, Inc. has developed the ClearFlo family of products and claim it can be applied to treat industrial wastewaters containing up to 5 times the salinity of seawater. The ClearFlo family of Water Transformation Solutions includes three key components: its patented forward osmosis membranes, a unique draw solution together with a draw solution recovery system.

The ClearFlo Membrane Brine Concentrator (MBC)™ incorporates the FO membrane elements, the patented draw solution as well as the recovery system. Oasys Water, Inc. has developed a forward osmosis system that uses a specially formulated draw solution that forces fresh water across the membrane. Feed water enters the system at one side of the membrane module as draw solution flows in from the other end in opposite direction. The concentration gradient formed drives the water across the semi permeable membrane diluting the draw solution. The dilute draw solution is regenerated using a thermal recovery process. In the thermal recovery system, the diluted draw solution is recovered by heating the solution to evaporate the draw solutes, leaving behind purified water.

The MBC™ system, based on Engineered Osmosis (ie Forward Osmosis), can reduce disposal volumes by more than 80%, which in turn reduces the total cost of water treatment by up to 30%. It can also treat high saline waters with salt content ranging from 5 to 15% and generates a drinking water quality reuse product together with a reduced volume brine for disposal It can achieve up to 85% water recovery and discharges brine with up to 25% salt concentration.

The technology can use renewable energy sources such as solarthermal, geothermal and industrial cogeneration heat. As a result of this unprecedented level of brine concentration in a membrane-based system, the ClearFlo Complete zero liquid discharge (ZLD) system can operate with a lower capacity crystallizer, requiring less thermal and electrical energy inputs and lower total cost. Oasys Water Inc. offers the ClearFlo Complete system as a comprehensive solution in partnership with the leading crystallizer providers and a network of leading EPCs and system operators. For complex wastewater streams from 300 m³/day to >10,000 m³/day, the ClearFlo Complete system provides a path to ZLD with lower cost, more reliable operation, and a greater operating flexibility when comparing to other technologies.

What follow is the description of the MBC™ system developed by Oasys Water, Inc. The pretreated feed is pumped to the MBC™ System Feed Tank. From the system feed tank, sodium bisulfite and anti-scalant are dosed inline to deoxidize and control scale, respectively, as the stream is pumped to the FO Membrane Array.

Feed water and concentrated draw solution (CDS) flow countercurrent through the FO modules separated by the high performance Oasys FO membrane. Water diffuses across the membrane, diluting the draw solution while simultaneously concentrating greater than 99 percent of the feed water dissolved solids in the concentrated brine.

Diluted draw solution (DDS) exits the FO Array and is pumped into the Draw Recovery Column where the draw solutes are stripped from the solution along with some water vapour. The concentrated brine exiting the FO membrane array is pumped into the Brine Column where any draw solutes that reverse-permeated into the brine are also recovered and then routed to the Draw Recovery Column. The mixed gas stream flows out the top of the Draw Recovery Column, where it is compressed and fully condensed in a heat exchanger. The Draw Recovery and Brine Column reboilers both utilize customer-supplied steam as an energy source. The condenser heat exchanger utilizes customer-supplied cooling water as a heat sink.

Intermediate product water is collected at the bottom of the Draw Recovery Column and passed through the Polishing RO System. This step reduces the product water TDS to below 500 mg/L and ensures recovery of the remaining nonvolatized draw solutes. The concentrate from the RO system is routed to the MBC System Feed Tank. The high quality, low TDS permeate from the RO system can be reused in the site's operations or safely discharged. The MBC draw solution recovery system integrates the Draw Recovery Column, the Brine Column, and the Polishing RO in order to maintain virtually 100% of the draw solutes within the system while maximizing energy efficiency.

**2c) Humidification** - **dehumidification:** stage in which hot air comes into contact with the rejection of the previous stage. During this contact, the rejection is concentrated when water passes from it to the hot air. In the stage of dehumidification the hot air is cooled condensing the decontaminated water. Concentration through humidification-dehumidification is a variant to be used in cases where there is the possibility of using sources of residual heat from another process or heat from renewable energies.

The company Gradiant Corporation offers a smart way to implement the humidification-dehumidification stages, by combining the Carrier Gas Extraction (CGE™) technology with the Selective Chemical Extraction (SCE™) process in a continuous, atmospheric pressure, ambient temperature humidification-dehumidification (HDH) desalination process to vaporize water controlling co-precipitation effects. Air is recirculated through a humidifier and multistage bubble column dehumidifier in a closed loop. As saline feedwater enters the unit, it is preheated in the dehumidifier before being heated an additional 10-15°C using a natural gas-fired boiler. Some of the feedwater is evaporated as it is sprayed over a packed bed. The water-saturated air is then pumped up through small holes in a series of shallow, water-filled trays in the dehumidifier. As water bubbles pass through the fresh water in the trays, it joins the water it is passing through creating more fresh water. Meanwhile the nonevaporated portion of the feed is removed as saturated brine. This so-called "bubble column" allows condensation of water vapor without needing expensive metal heat exchangers.

Selective Chemical Extraction (SCE) is a proprietary set of treatment technologies that are cost-effective improvements on conventional precipitation technologies. They were designed to address treatment challenges posed by high levels of contamination found in produces and flowback waters. Selective Chemical Extraction (SCE™) is a multi-step treatment process customizable to meet any effluent quality including oil and grease removal, H2S stripping, VOC and semi-volatile removal, ion-specific removal and lamella clarification.

The core of SCE is ion-specific induced precipitation utilizing proprietary chemistry plans. Chemically induced reactions with targeted ions forms low solubility components. Divalent ions (Ca, Mg, Ba, Sr, SO4, CO3), trivalent ions (Fe, Al), as well as dissolved silica and boron can be economically removed by this method. The Selective Chemical Extraction (SCE™) process is based on controlled co-precipitation effects. Additional pretreatment may include oil and grease removal, H2S stripping, VOC and semi-volatile removal, ion specific removal and lamella clarification. SCE™ is operated in the oilfield today by Gradiant Corporation producing various grades of clean brine at low costs and with minimal operator interference.

In the Carrier Gas Extraction (CGE™) process water well below the boiling point is vaporized by direct contact with a carrier gas; the moist air is subsequently bubbled through cooler water where the purified vapour condenses. But the temperature difference between the warm and cool water is much less than in conventional dehumidifiers, and the surface area provided by the small bubbles is much greater than that of a flat condenser surface, leading to a more efficient process. By acidification of the feed water scale forming ions are inhibited from generating scale in a thermal desalination devise.

Carrier gas extraction (CGE) process recirculates air through a humidifier and multistage bubble column dehumidifier in a closed loop. As saline feedwater enters the unit, it is preheated in the dehumidifier before being heated an additional 10-15°C using a natural gas-fired boiler. Some of the feedwater is evaporated as it is sprayed over a packed bed and condensed as distillate in the dehumidifier. Meanwhile, the nonevaporated portion of the feed is removed as saturated brine and the now re-humidified air is then returned to the dehumidifier column to continue the process.

Among its advantages, the CGE desalination technology can achieve high recoveries stated to be in the 70-85% range for saline feedwater and is stated to be a cost-effective version of standard chemical-precipitation techniques. The combination of technologies, according to Gradiant, allows these systems to treat waters with higher levels of contaminants. Custom Control systems are used to optimize the system to run at peak thermal performance, minimize operator intervention, and minimize chemical consumption. According to Gradiant, several design innovations allow these systems to use less energy and treat water at lower costs than competing treatment methods. Design innovations include vaporizing the water below boiling temperatures using the dry air carrier gas, incorporating a column with microbubbles providing a direct-contact condenser that optimizes condensing surfaces resulting in more efficient heat transfer and minimizes hardware, utilizing lower temperature differences between the warm and cool water than in a conventional dehumidifying system, and using inexpensive materials in the heat exchanger. Per customer requirements, the technologies can produce water of specific characteristics ranging from 50 ppm TDS (total dissolved solids) to 260,000 ppm TDS.

### 3) Stage of zero liquid discharge - Evapo - crystallizer:

In the previous stages of the process, the liquid effluent has been concentrated to the maximum, being found around the point of saturation in which the precipitation of the salts which are present mostly in the liquid effluent begins to occur. The zero liquid discharge stage acts as a crystallizer, recovering the reject water from the concentration stage by evaporation and producing a stream of solids.

This part of the system comprises evaporators followed by crystallizers. In the evaporators the volume of the liquid effluent is reduced by evaporation, obtaining a condensate of water. In the crystallizers, the contaminants present in the liquid effluent precipitate with the solids. Examples of evaporators which may be used are the ones offered by the companies GE Power & Water, Evatherm and Inerco.

## Claims

1. A zero liquid discharge treatment process for the treatment of wastewater to be treated coming from the industry which includes at least the following steps:
a) a first step of desalination avoiding precipitation of salts by means of a treatment by advanced reverse osmosis of high degree of recovery, in which several periodic cleanings are carried out by contacting the surface of some membranes with water with lower content in dissolved salts than the wastewater to be treated;
b) a second step of concentration, in which the rejection of the first stage produced in reverse osmosis is concentrated by applying one of the technologies of the group formed by vibratory osmosis, forward osmosis and humidification-dehumidification;
c) a zero liquid discharge stage acting as a crystallizer or an evapo-crystallizer, wherein the liquid effluent that has been concentrated to the maximum in the previous steps is around the point of saturation in which the precipitation of the salts which are present mostly in the liquid effluent begins to occur, the zero liquid discharge step acting as a crystallizer, wherein the reject water from the concentration step is recovered by evaporation and a stream of solids is produced.

2. The zero liquid discharge treatment process according to claim 1, wherein the advanced reverse osmosis of the first step a) of desalination is carried out by a closed circuit desalination consisting in a single-stage osmosis that operates in production and purge cycles, wherein in the production cycles the liquid effluent is concentrated over time while water is produced and once the concentrated liquid effluent has reached a preset salinity, it is purged and cleaned with the same liquid effluent with lower concentration of salts than former concentration, without allowing the salts to precipitate.

3. The zero liquid discharge treatment process according to claim 1, wherein the advanced reverse osmosis of the first step a) of desalination is carried out by a flow reversal consisting in a two or three stage osmosis system with continuous operation, but alternating the different stages periodically with each other, wherein from time to time the last stage in which the concentration of salts and therefore the precipitation potential are greater, are gone interchanging with the first stage by means of a system of valves that treat the liquid effluent of lower concentration.

4. The zero liquid discharge treatment process according to claim 1, wherein the second step b) consists in a stage of vibratory osmosis that incorporates vibratory membranes that achieve recovering water and concentrating the rejection of the previous stage with high content in solids and high potential of formation of precipitates.

5. The zero liquid discharge treatment process according to claim 1, wherein the second step b) is carried out by means of a forward osmosis which comprises the use of forward osmosis membranes to concentrate the rejection with a solids content and moderate precipitate formation potential, wherein the water passes from the rejection of the previous stage to a solution of higher salinity due to the difference in osmotic pressure.

6. The zero liquid discharge treatment process according to claim 1, wherein the second step b) is carried out by means of humidification-dehumidification, wherein hot air comes into contact with the rejection of the previous stage and during this contact, the rejection is concentrated when water passes from it to the hot air, the hot air being cooled condensing the decontaminated water in the stage of dehumidification.

7. The zero liquid discharge treatment process for the treatment of wastewater wherein the said wastewater comes from mining or the steel industry.
